# FASCICULE DE BREVET EUROPEEN

(11) **EP 2 275 903 B1**
(45) Date de publication et mention de la délivrance du brevet: **03.10.2012**
(21) Numéro de dépôt: 10168582.4
(22) Date de dépôt: 06.07.2010
(51) Int. Cl.: G06F 1/32

(54) **Procédé et dispositif pour la gestion dynamique de la consommation d'un processeur**
Verfahren und Vorrichtung zur dynamischen Leistungsverwaltung eines Prozessors
Method and apparatus for dynamic power consumption management of a processor

(30) Priorité: 07.07.2009 FR 0903346
(43) Date de publication de la demande: 19.01.2011
(73) Titulaire: Thales, 92200 Neuilly Sur Seine (FR)
(72) Inventeur: Bourdelles, Michel, 92700, Colombes (FR)
(74) Mandataire: Dudouit, Isabelle

(56) Documents cités:
- US-A1- 2008 016 380
- US-A1- 2009 077 394
- US-A1- 2009 172 434

## Description

La présente invention concerne un procédé et un dispositif de gestion intelligente de la consommation dans un processeur qui exécute une application comportant différentes phases de traitement présentant des charges de calcul variables.

Elle s'applique plus particulièrement dans le cadre de systèmes de communications qui mettent en oeuvre à la fois des phases de veille ou d'écoute qui nécessitent une faible puissance de calcul et des phases d'émission/réception d'un signal qui au contraire doivent bénéficier de toute la puissance disponible sur le processeur pour exécuter ces traitements. L'invention s'applique pour des processeurs de traitement qui ont une capacité de mise à l'échelle dynamique de la tension et/ou de la fréquence, telle que la technique connue sous l'abréviation anglo-saxonne DVFS (« Dynamic Voltage/Frequency Scaling »).

La gestion dynamique de la consommation d'un processeur, par exemple un processeur générique de type GPP (« General Purpose Processor »), consiste à adapter sa tension ou sa fréquence de manière à moduler la puissance fournie par le processeur en fonction de la charge de calcul nécessaire à l'application qu'il exécute.

Les traitements mis en oeuvre par un système de communication peuvent être regroupés en deux ou plusieurs ensembles en fonction de la charge de calcul qu'ils nécessitent. Par exemple, une phase de veille ayant pour fonction de détecter une nouvelle communication nécessite un nombre d'opérations par seconde moins important qu'une phase d'émission ou de réception de données. Ainsi, un mode de consommation peut être affecté à chacune de ces phases en fonction de la puissance délivrée, mode faible puissance pour la phase de veille, mode forte puissance pour les phases d'émission ou de réception. Le nombre d'opérations à exécuter par unité de temps pour chacune de ces phases est prédictible.

La transition d'un mode faible puissance vers un mode forte puissance se fait avec une latence importante qui est en pratique très pénalisante lorsque l'application visée nécessite des temps de réaction rapides lors du passage d'une phase de traitement à faible puissance de calcul Vers une phase de traitement a puissance de calcul élevée. De plus, le passage d'une phase à une autre peut résulter de la réception de sitmuli extérieurs non prédictibles par l'application elle-meme. Par exemple, le passage d'une phase de veille à une phase de réception de données se fait lorsqu'un mot technique est reçu. Cet événement n'est pas prédictible par l'application ou le processeur lui-même. La latence induite par les changements de modes de consommation lors de la réception de ces stimuli non prédictibles empêche l'exécution d'opérations pendant ce temps de latence et affecte le traitement associé. Cependant une valeur maximale de cette latence est connue.

Les solutions connues traitant du problème de l'utilisation de techniques DVFS pour la gestion de la consommation d'un processeur sont basées le plus souvent sur une prédiction du temps de calcul inhérent à une phase donnée de l'application exécutée. Ces prédictions sont basées sur des modèles empiriques et ne prennent pas en compte l'intervention de stimuli extérieurs comme éléments déclenchant une phase de traitement nécessitant une charge de calcul importante. Les solutions de l'art antérieur ne traitent pas non plus de l'inconvénient de la latence introduite lors d'une transition entre deux modes de consommation.

On connait notamment les demandes de brevet américain US 2009/077394, US2008/0016380 et US 2009/0172434 qui décrivent des méthodes de gestion de la puissance consommée par un processeur.

Ces méthodes ne sont pas adaptées à des applications exécutant plusieurs phases de traitement successives avec des besoins en puissance différents. De plus, elles ne permettent pas une gestion de la puissance de façon dynamique en exploitant, en temps réel, les informations telles que la latence de basculement entre deux modes de consommation.

La présente invention propose une solution permettant d'effectuer une décision dynamique sur le passage ou non d'un mode de consommation élève vers un mode de faible consommation (ou inversement) sans impacter ou en impactant avec une dégradation évaluable le fonctionnement nominal de l'application exécutée.

A cet effet l'invention a pour objet un procédé de gestion de la puissance consommée dans un processeur exécutant une application, ladite application exécutant plusieurs phases de traitement, chaque phase étant associée à une charge de calcul, ledit procédé étant caractérisé en ce qu'il consiste à exécuter au moins les étapes suivantes :
- définir un premier mode de consommation nominal pour lequel le niveau de puissance consommée dans ledit processeur est compatible du fonctionnement nominal de ladite application,
- définir au moins un deuxième mode de faible consommation pour lequel le niveau de puissance consommée dans ledit processeur est inférieur à celui dudit mode de consommation nominal,
- exécuter une fonction de décision permettant de basculer ou non dudit mode de consommation nominal vers ledit mode de faible consommation lors de la transition d'une phase de traitement vers une autre phase de traitement de ladite application, la décision étant prise au moins en fonction de la charge de calcul associée aux dites phases de traitement, de la latence maximum induite par le basculement d'un mode de consommation vers un autre et de paramètres de l'application,
- de façon à garantir le maintien du fonctionnement nominal de ladite application.

Dans une variante de réalisation de l'invention, ladite application est une application de transmission de données sans fils à saut de fréquence entre au moins deux équipements, les données étant transmises sous forme de paliers, chaque palier étant émis à une fréquence distincte, ladite application comprenant au moins une phase de veille de la liaison, une phase d'établissement de la liaison et une phase de communication, ladite décision de basculement du mode de consommation nominal vers ledit mode de faible consommation étant prise lors de la transition de la phase de communication vers la phase de veille en fonction du rapport signal à bruit de la liaison et/ou de la dérive temporelle de l'horloge dudit processeur de la façon suivante :
- Si le rapport signal à bruit de la liaison est supérieur à un seuil donné, le basculement du mode de consommation nominal vers ledit mode de faible consommation est effectué,
- Si la dérive temporelle de l'horloge dudit processeur est inférieure à un seuil donné S le basculement du mode de consommation nominal vers ledit mode de faible consommation est effectué.

Dans une variante de réalisation de l'invention, la phase de veille de la liaison consiste à veiller la réception d'un mot technique sur différentes fréquences, la durée de veille étant paramétrable, la phase d'établissement de la liaison consiste à émettre/recevoir une pluralité de mots techniques, chaque mot technique étant émis/reçu sur une fréquence différente, ladite décision de basculement du mode de consommation nominal vers ledit mode de faible consommation étant prise en plus en fonction du critère suivant :
- Si la durée de temps restant entre la réception du premier mot technique et le début de la phase de communication est supérieure à la latence maximum induite par le basculement d'un mode de consommation vers un autre, alors le basculement du mode de consommation nominal vers ledit mode de faible consommation est effectué, sinon il n'est pas effectué.

Dans une variante de réalisation de l'invention, le basculement d'un mode de consommation vers un autre mode de consommation est réalisé à l'aide d'une méthode de mise à l'échelle dynamique de la tension et/ou de la fréquence de type DVFS (« Dynamic Voltage and Frequency Scaling »).

L'invention a également pour objet un dispositif comportant au moins un processeur exécutant une application comprenant plusieurs phases de traitement, **caractérisé en ce qu**'il comporte des moyens adaptés pour mettre en oeuvre les étapes du procédé de gestion de la consommation tel que décrit précédemment.

D'autres caractéristiques apparaîtront à la lecture de la description détaillée donnée à titre d'exemple et non limitative qui suit faite en regard de dessins annexés qui représentent :
La figure 1, un exemple de réalisation du procédé selon l'invention pour une application de communications sans fil,
Les figures 2 et 3, deux exemples illustrant la mise en oeuvre du procédé selon l'invention,
La figure 4, un synoptique de l'architecture d'un composant électronique implémentant le procédé selon l'invention.

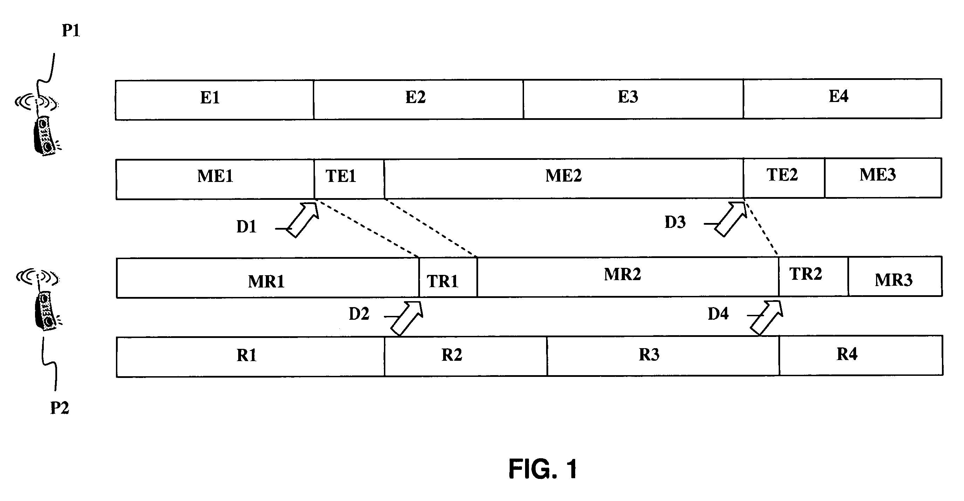

La figure 1 décrit un exemple de système de communication pour lequel l'invention s'applique. Les différentes phases qui interviennent lors d'une communication sans fils entre deux équipements sont indiquées. Chaque équipement comporte au moins un processeur qui met en oeuvre le procédé selon l'invention. Les modes de consommation correspondant à chaque phase de traitement sont également indiquées ainsi que les transitions d'un mode vers l'autre.

Un premier équipement émetteur/récepteur P1 communique avec un second équipement émetteur/récepteur P2 selon trois phases distinctes. L'équipement émetteur/récepteur P1 met en oeuvre successivement une phase de veille de la liaison E1, une phase d'établissement de la liaison E2 ou en anglais « Link Set Up », et une phase de communication E3. A la fin de la communication, l'équipement P1 retourne dans une nouvelle phase de veille E4. L'équipement P2 met en oeuvre une succession de phases similaires, une première phase de veille de la liaison R1, une phase d'établissement de la liaison R2 qui intervient suite à l'envoi par l'équipement P1 de messages techniques pendant la phase d'établissement de la liaison E2 et une phase de communication R3 qui intervient suite à l'envoi de messages de données par l'équipement P1 pendant la phase de communication E3. A la fin de la phase de communication R3, l'équipement P2 retourne dans une phase de veille de la liaison R4.

Les différentes phases de traitement décrites nécessitent, pour être réalisées correctement, c'est-à-dire en temps réel et sans dégradation de la liaison de donnée entre les deux équipements, des charges de calcul adaptées à la complexité des traitements mis en oeuvre. En particulier, la phase de veille de la liaison nécessite une charge de calcul plus réduite que les phases d'établissement de la liaison et de communication qui mettent en oeuvre des transmissions à un débit contraint ainsi que des traitements complexes pour établir correctement l'ensemble des paramètres qui définissent le type de liaison supportée, transmettre et recevoir avec une fiabilité maximum les données échangées entre les deux équipements.

Les équipements P1 et P2 ont la capacité de gérer dynamiquement leur consommation en utilisant, par exemple, une technique connue de l'Homme du métier par l'abréviation anglo-saxonne DVFS (« Dynamic Voltage & Frequency Scaling »). Cette technique permet de définir plusieurs modes de consommation en fonction du niveau de puissance délivrée par le composant qui exécute les différentes phases de communication mentionnées précédemment. Deux modes de consommation peuvent être, par exemple, définis, un premier mode de faible consommation et un second mode de forte consommation. Les niveaux précis de consommation de chaque mode peuvent être déterminés par l'intermédiaire de la fréquence ou de la tension du composant grâce à une technique de type DVFS.

Le mode de faible consommation ME1,ME3,MR1,MR3, est associé aux phases de veille de la liaison E1,E4,R1,R4 qui nécessitent une faible charge de calcul. Au contraire, le mode de forte consommation ME2,MR2 est associé aux phases d'établissement de la liaison E2,R2 et aux phases de communications E3,R3 qui nécessitent une forte charge de calcul.

Le problème se pose de la transition entre les deux modes de consommation qui induit une latence. Lorsque l'équipement P1 passe dans sa phase d'établissement de la liaison E2, il déclenche la transition D1 du mode de faible consommation ME1 vers le mode de forte consommation ME2, mais cette transition n'est effective qu'après une latence TE1. Le début de la phase d'établissement de la liaison E2 peut alors s'en trouver affecté et le fonctionnement optimal de cette phase n'est plus assuré pendant la durée correspondant à la phase TE1. De façon identique, l'équipement P2 déclenche D2 le basculement du mode faible consommation MR1 au mode forte consommation MR2 au moment où il reçoit les premiers messages techniques transmis par l'équipement P1 lors de sa phase d'établissement de la liaison E2. Ici aussi le début de la phase d'établissement de la liaison R2 de l'équipement récepteur P2 peut s'en trouver affecté.

A l'instant où la communication E3 se termine, une autre décision D3 de basculement, cette fois du mode forte consommation ME2 vers le mode faible consommation ME3 est réalisée par l'équipement P1 et de façon similaire une décision D4 est réalisée par l'équipement P2. C'est au moment où une communication se termine et une nouvelle phase de veille E4,R4 intervient que la décision D3,D4 de passage, ou non, en faible consommation doit prendre en compte l'impact de la latence TE1,TR1 qui interviendra lorsque le passage inverse sera effectué au démarrage d'une nouvelle phase d'établissement de la liaison.

Cette décision doit être élaborée en prenant en compte l'impact de la latence TE1,TR1 sur la qualité de la liaison. Cette latence induit une diminution de la capacité de traitement des équipements P1,P2 ce qui a pour effet d'empêcher l'exécution d'opérations ainsi que l'émission/réception d'informations par ces équipements. Cependant, il est possible d'estimer s'il est tolérable de perdre une partie de ces mots en regard de différents critères relatifs à la qualité de la liaison, aux paramètres du protocole radio mis en oeuvre ou encore de la qualité de la synchronisation d'un équipement par rapport aux autres équipements environnants au sein d'un réseau partagé.

Le procédé selon l'invention consiste notamment à élaborer une fonction de décision permettant de déclencher, ou pas, le basculement d'un mode forte consommation vers un mode faible consommation lors, par exemple, d'une transition entre une phase de communication et une phase de veille de la liaison.

Cette prise de décision peut être effectuée en fonction de différents critères dont le dénominateur commun est d'assurer que le passage en mode faible consommation n'impactera pas la qualité de la liaison de données ou l'impactera de manière quantifiable et tolérable. A cet effet, certains paramètres sont utilisés tels que la connaissance de la qualité du canal de propagation, de la qualité de l'horloge de l'équipement qui implémente le procédé de gestion de la consommation selon l'invention, de la connaissance de la synchronisation d'un équipement vis à vis des autres équipements intervenant au sein du même réseau ou encore des paramètres du protocole radio ou de la forme d'onde utilisés.

La qualité du canal de propagation peut être estimée par l'intermédiaire du rapport signal à bruit S/B mesuré sur la liaison. Ce rapport S/B est le plus souvent déterminé par un processeur spécialisé pour le traitement des signaux tel un processeur de type DSP (« Digital Signal Processor ») qui communique ensuite ce rapport à un autre processeur qui implémente la gestion de la consommation. La phase d'établissement de la liaison LSU met en oeuvre l'envoi de messages techniques dont le nombre est paramétrable en fonction notamment de la qualité de la liaison. Certains messages sont envoyés plusieurs fois selon un mécanisme de gestion de la redondance qui permet d'assurer la réception correcte de ces messages techniques qui contiennent des informations importantes telles que les adresses de l'émetteur et du récepteur, le type de service fourni, le type de données transmises, le type de forme d'onde mise en oeuvre pour la modulation des données et la qualité des horloges. Il est donc possible de déterminer si la perte d'un nombre limité de messages techniques n'engendre pas de dégradation importante sur la liaison. Avec cette connaissance a priori de la capacité de perdre des messages techniques après réception d'au moins un de ces messages dans une configuration donnée, il est possible de passer en faible consommation en phase de veille et de basculer en forte consommation en phase de transmission sans risque de perdre la liaison. A cet effet, un critère de décision possible est le suivant, si le rapport signal sur bruit estimé sur la liaison S/B est supérieur à un seuil donné alors la qualité de la liaison est suffisamment bonne pour qu'il soit possible de passer d'un mode forte consommation à un mode faible consommation entre les phases de communication et de veille de la liaison.

Un second critère de décision possible est basé sur la qualité de l'horloge. Au cours de la communication entre les deux équipements P1 et P2, une dérive peut affecter les horloges qui servent de bases de temps pour synchroniser l'émission et la réception.

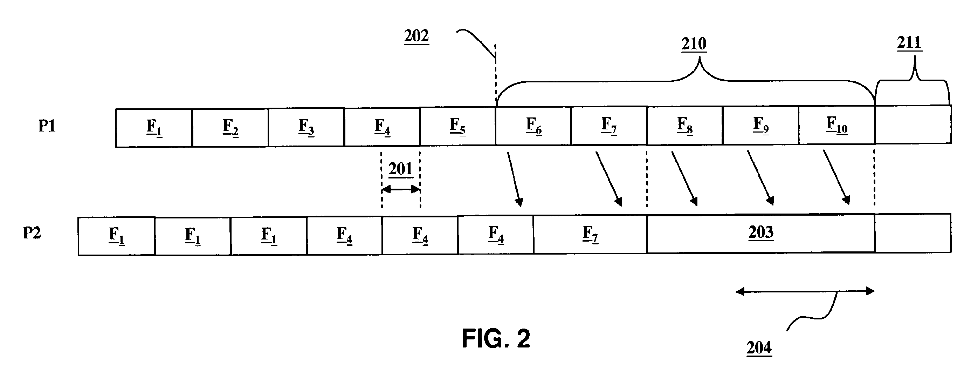

La figure 2 décrit un exemple de cas d'application de l'invention. Les équipements P1 et P2 communiquent ensemble à l'aide d'une transmission à saut de fréquence. Les données sont transmises sous forme de paliers à une fréquence donnée F₁,F₂,F₃,F₄,F₅, F₆,F₇,F₈,F₉,F₁₀ qui peut varier d'un palier à son successeur.

Dans l'exemple illustré à la figure 2, l'équipement P1 veille la réception d'un mot technique sur une succession de fréquences F₁,F₂,F₃,F₄,F₅ distinctes puis émet une série de mots techniques à partir de l'instant 202, chaque mot technique étant également transmis sur une fréquence différente F₆,F₇,F₈,F₉,F₁₀. Dans l'exemple, le nombre de mots techniques émis est égal à 5, ce nombre est un paramètre de la phase d'établissement de la liaison 210, l'émission de ces mots techniques précède la phase de communication 211.

L'équipement P2 est désynchronisé par rapport à l'équipement P1 d'un décalage temporel 201 du à l'imprécision des horloges. La valeur de ce décalage temporel 201 induit une loi de veille de l'équipement P2 de trois paliers par fréquence, ce qui signifie que l'équipement P2 veille la réception d'un mot technique trois fois successivement sur la même fréquence F₁,F₄,F₇. Lorsque le mot technique émis par l'équipement P1 sur la fréquence F₇ est reçu par l'équipement P2, la durée restante 203 entre la réception de ce mot technique et le début de la phase de communication 211 est suffisante pour permettre une transition d'un mode faible consommation vers un mode forte consommation en regard de la valeur de la latence maximum 204 engendrée par cette transition. Par suffisante on entend que la durée 203 est supérieure à la latence maximum 204. La réception d'un seul mot technique sur les cinq émis est suffisante pour établir correctement la liaison.

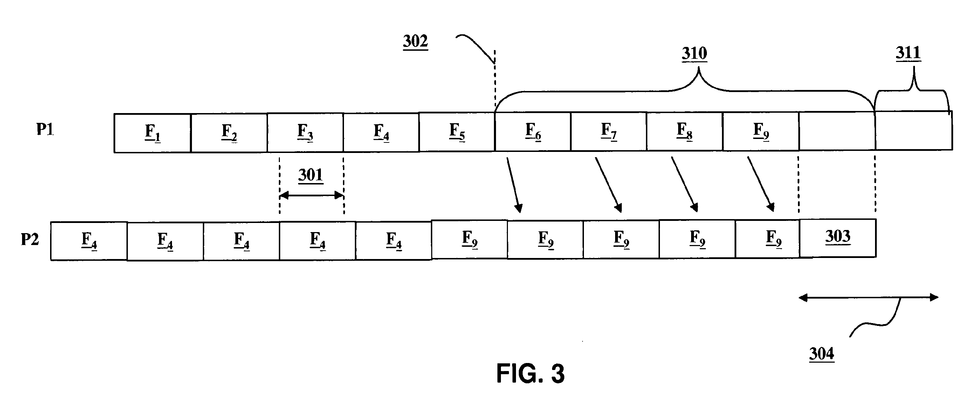

La figure 3 illustre un cas d'application de l'invention pour lequel le décalage 301 entre l'équipement récepteur P2 et l'équipement émetteur P1 est important ce qui induit une loi de veille de l'équipement P2 de cinq paliers par fréquence. Ce cas de figure entraine une réception d'un mot technique plus tardif, ici lorsque l'équipement P2 veille la fréquence F₉. Dans ce cas, la durée restante 303 entre la réception d'un mot technique et le début de la phase de communication n'est pas suffisante, car inférieure à la latence maximum 304 engendrée par une transition d'un mode faible consommation vers un mode forte consommation pour permettre cette transition.

Le critère de décision du passage de forte à faible consommation est donc élaboré en prenant en compte d'une part l'incertitude de temps de désynchronisation 201,301 vis à vis des autres postes du réseau et d'autre part la durée de veille sur une fréquence de réception correspondant à cette incertitude, en regard de la latence maximum 204,304 induite par une transition d'un mode de consommation à un autre.

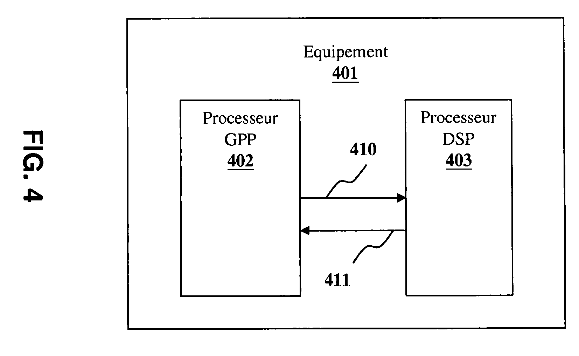

La figure 4 décrit schématiquement un équipement 401 émetteur/récepteur comprenant au moins un processeur générique 402, par exemple un processeur de type GPP, et un processeur de traitement de signal 403, de type DSP. Le procédé de gestion de la consommation est implémenté sur le processeur générique 402 qui gère les couches applicatives du système de transmission sans fils réalisé par l'équipement 401 et qui communique avec le processeur de traitement de signal 403 qui, quant à lui, gère les couches basses du système de transmission. Le processeur de traitement de signal 403 effectue une estimée du rapport signal sur bruit de la liaison et la communique 411 au processeur générique 402 qui utilise cette information pour moduler sa consommation par l'intermédiaire du procédé selon l'invention. Le processeur générique 402 informe également 410 le processeur de traitement de signal 403, qu'une transition d'un mode de consommation vers un autre à été décidée. Cette information permet d'adapter les traitements effectués au niveau des couches basses en fonction du niveau de consommation du processeur générique 402.

Sans sortir du cadre de l'invention, le procédé de gestion de la consommation peut être implémenté sur un module de gestion de la consommation dissocié du ou des processeurs dont on cherche à optimiser la consommation et qui communique avec eux par le biais de moyens informatiques tels qu'un bus logiciel.

Le procédé selon l'invention est compatible de tout type d'applications pour lesquelles la charge de calcul mise en oeuvre dépend de stimuli extérieurs qui déclenchent une phase de traitement donnée pour laquelle la puissance de calcul nécessaire est prédictible.

De plus l'application doit avoir la capacité d'être informée du fait que certaines parties des traitements exécutés peuvent être ignorées du comportement nominal en fonction d'informations sur l'environnement de l'application. Les exigences de l'utilisateur doivent cependant être respectées.

L'invention présente notamment l'avantage d'offrir un gain en consommation lié à l'utilisation de méthodes de type DVFS sans perte de performances. En effet, l'impact de la latence importante intervenant lors du passage d'un mode de consommation à un autre est réduit car la décision de passer en faible consommation n'est prise que si les dégradations résultantes sur la liaison de données son négligeables.

## Revendications

1. Procédé de gestion de la puissance consommée dans un processeur (402) exécutant une application, ladite application exécutant plusieurs phases de traitement (E1,E2,E3,E4), chaque phase étant associée à une charge de calcul, ledit procédé étant **caractérisé en ce qu'**il consiste à exécuter au moins les étapes suivantes :
- définir un premier mode de consommation nominal (ME2,MR2) pour lequel le niveau de puissance consommée dans ledit processeur (402) est compatible du fonctionnement nominal de ladite application,
- définir au moins un deuxième mode de faible consommation (ME1,ME3,MR1,MR3) pour lequel le niveau de puissance consommée dans ledit processeur (402) est inférieur à celui dudit mode de consommation nominal (ME2,MR2),
- exécuter une fonction de décision permettant de basculer ou non dudit mode de consommation nominal (ME2,MR2) vers ledit mode de faible consommation (ME3,MR3) lors de la transition d'une phase de traitement (E3) vers une autre phase de traitement (E4) de ladite application, la décision étant prise au moins en fonction de la charge de calcul associée aux dites phases de traitement (E3,E4), de la latence maximum (204,304) induite par le basculement d'un mode de consommation vers un autre et de paramètres de l'application, de façon à garantir le maintien du fonctionnement nominal de ladite application.

2. Procédé selon la revendication 1 **caractérisé en ce que** ladite application est une application de transmission de données sans fils à saut de fréquence entre au moins deux équipements (P1,P2), les données étant transmises sous forme de paliers, chaque palier étant émis à une fréquence distincte, ladite application comprenant au moins une phase de veille de la liaison (E1,R1,E4,R4), une phase d'établissement de la liaison (E2,R2) et une phase de communication (E3,R3), ladite décision de basculement du mode de consommation nominal (ME2,MR2) vers ledit mode de faible consommation (ME3,MR3) étant prise lors de la transition de la phase de communication (E3,R3) vers la phase de veille (E4,R4) en fonction du rapport signal à bruit de la liaison et/ou de la dérive temporelle de l'horloge dudit processeur de la façon suivante :
- Si le rapport signal à bruit de la liaison est supérieur à un seuil donné, le basculement du mode de consommation nominal (ME2,MR2) vers ledit mode de faible consommation (ME3,MR3) est effectué,
- Si la dérive temporelle de l'horloge dudit processeur est inférieure à un seuil donné S le basculement du mode de consommation nominal (ME2,MR2) vers ledit mode de faible consommation (ME3,MR3) est effectué.

3. Procédé selon la revendication 2 **caractérisé en ce que** la phase de veille de la liaison (E1,R1,E4,R4) consiste à veiller la réception d'un mot technique sur différentes fréquences, la durée de veille étant paramétrable, la phase d'établissement de la liaison (E2,R2) consiste à émettre/recevoir une pluralité de mots techniques, chaque mot technique étant émis/reçu sur une fréquence différente, ladite décision de basculement du mode de consommation nominal (ME2,MR2) vers ledit mode de faible consommation (ME3,MR3) étant prise en plus en fonction du critère suivant :
- Si la durée (203) de temps restant entre la réception du premier mot technique et le début de la phase de communication (E3,R3) est supérieure à la latence maximum (204) induite par le basculement d'un mode de consommation vers un autre, alors le basculement du mode de consommation nominal (ME2,MR2) vers ledit mode de faible consommation (ME3,MR3) est effectué, sinon il n'est pas effectué.

4. Procédé selon l'une des revendications précédentes **caractérisé en ce que** le basculement d'un mode de consommation vers un autre mode de consommation est réalisé à l'aide d'une méthode de mise à l'échelle dynamique de la tension et/ou de la fréquence de type DVFS (« Dynamic Voltage and Frequency Scaling »).

5. Dispositif comportant au moins un processeur exécutant une application comprenant plusieurs phases de traitement (E1,E2,E3,E4), chaque phase étant associée à une charge de calcul, **caractérisé en ce qu'**il comporte des moyens adaptés pour mettre en oeuvre les étapes du procédé de gestion de la consommation selon les revendications 1 à 4.

## Claims

1. A method for managing the power consumed in a processor (402) executing an application, said application executing several processing phases (E1, E2, E3, E4), each phase being associated with a computational load, said method being **characterised in that** it consists in executing at least the following steps of:
- defining a first nominal consumption mode (ME2, MR2) for which the level of power consumed in said processor (402) is compatible with the nominal operation of said application;
- defining at least one second low consumption mode (ME1, ME3, MR1, MR3) for which the level of power consumed in said processor (402) is lower than that of said nominal consumption mode (ME2, MR2);
- executing a decision function for switching or not switching from said nominal consumption mode (ME2, MR2) to said low consumption mode (ME3, MR3) during the transition from one processing phase (E3) to another processing phase (E4) of said application, the decision being taken at least as a function of the computational load associated with said processing phases (E3, E4), of the maximum latency (204, 304) induced by switching from one consumption mode to another and of parameters of the application, so as to ensure that the nominal operation of said application is maintained.

2. The method according to claim 1, **characterised in that** said application is an application for wireless frequency hopping data transmission between at least two pieces of equipment (PI, P2), the data being transmitted in the form of steps, each step being emitted at a distinct frequency, said application comprising at least one standby phase of the connection (E1, R1, E4, R4), one phase for establishing the connection (E2, R2) and one communication phase (E3, R3), said decision for switching from the nominal consumption mode (ME2, MR2) to said low consumption mode (ME3, MR3) being taken during the transition from the communication phase (E3, R3) to the standby phase (E4, R4) as a function of the signal-to-noise ratio of the connection and/or of the time shift of the clock of said processor in the following manner:
- if the signal-to-noise ratio of the connection is greater than a given threshold, the switch from the nominal consumption mode (ME2, MR2) to said low consumption mode (ME3, MR3) is carried out;
- if the time shift of the clock of said processor is less than a given threshold S, the switch from the nominal consumption mode (ME2, MR2) to said low consumption mode (ME3, MR3) is carried out.

3. The method according to claim 2, **characterised in that** the standby phase of the connection (E1, R1, E4, R4) consists in standing by for receiving a technical word on different frequencies, the standby duration being configurable, the phase for establishing the connection (E2, R2) consists in transmitting/receiving a plurality of technical words, each technical word being transmitted/received on a different frequency, said decision for switching from the nominal consumption mode (ME2, MR2) to said low consumption mode (ME3, MR3) also being taken as a function of the following criterion:
- if the duration (203) of time remaining between the reception of the first technical word and the start of the communication phase (E3, R3) is greater than the maximum latency (204) induced by the switch from one consumption mode to another, then the switch from the nominal consumption mode (ME2, MR2) to said low consumption mode (ME3, MR3) is carried out, otherwise it is not carried out.

4. The method according to any one of the preceding claims, **characterised in that** the switch from one consumption mode to another consumption mode is carried out using a Dynamic Voltage and/or Frequency Scaling (DVFS) type procedure.

5. A device comprising at least one processor executing an application comprising several processing phases (E1, E2, E3, E4), each phase being associated with a computational load, **characterised in that** it comprises means that are designed to implement the steps of the method for consumption management according to claims 1 to 4.

## Patentansprüche

1. Verfahren zum Verwalten der Leistung, die in einem eine Anwendung ausführenden Prozessor (402) verbraucht wird, wobei die Anwendung mehrere Verarbeitungsphasen (E1, E2, E3, E4) ausführt, wobei jede Phase mit einer Rechenlast assoziiert ist, wobei das Verfahren **dadurch gekennzeichnet ist, dass** es bei der Ausführung wenigstens die folgenden Schritte beinhaltet:
- Definieren eines ersten Nennverbrauchsmodus (ME2, MR2), für den die im Prozessor (402) verbrauchte Leistungsmenge mit dem Nennbetrieb der Anwendung kompatibel ist;
- Definieren von wenigstens einem zweiten Niederverbrauchsmodus (ME1, ME3, MR1, MR3), für den die im Prozessor (402) verbrauchte Leistungsmenge niedriger ist als im Nennverbrauchsmodus (ME2, MR2);
- Ausführen einer Entscheidungsfunktion zum Umschalten oder Nichtumschalten aus dem Nennverbrauchsmodus (ME2, MR2) in den Niederverbrauchsmodus (ME3, MR3) beim Übergang von einer Verarbeitungsphase (E3) in eine andere Verarbeitungsphase (E4) der Anwendung, wobei die Entscheidung wenigstens in Abhängigkeit von der mit den Verarbeitungsphasen (E3, E4) assoziierten Rechenlast, der durch Umschalten von einem Verbrauchsmodus in einen anderen induzierten maximalen Latenz (204, 304) und von Parametern der Anwendung getroffen wird, um zu gewährleisten, dass der Nennbetrieb der Anwendung beibehalten bleibt.

2. Verfahren nach Anspruch 1, **dadurch gekennzeichnet, dass** die Anwendung eine Anwendung für eine drahtlose Frequenzsprungdatenübertragung zwischen wenigstens zwei Geräten (P1, P2) ist, wobei die Daten in Form von Stufen übertragen werden, wobei jede Stufe auf einer eigenen Frequenz ausgesendet wird, wobei die Anwendung wenigstens eine Bereitschaftsphase der Verbindung (E1, R1, E4, R4), eine Phase zum Aufbauen der Verbindung (E2, R2) und eine Kommunikationsphase (E3, R3) beinhaltet, wobei die Entscheidung zum Umschalten vom Nennverbrauchsmodus (ME2, MR2) in den Niederverbrauchsmodus (ME3, MR3) beim Übergang von der Kommunikationsphase (E3, R3) in die Bereitschaftsphase (E4, R4) in Abhängigkeit vom Signal-Rausch-Verhältnis der Verbindung und/oder von der Zeitverschiebung des Taktgebers des Prozessors auf die folgende Weise erfolgt:
- wenn das Signal-Rausch-Verhältnis der Verbindung größer als ein gegebener Schwellenwert ist, dann wird vom Nennverbrauchsmodus (ME2, MR2) in den Niederverbrauchsmodus (ME3, MR3) umgeschaltet;
- wenn die Zeitverschiebung des Taktgebers des Prozessors kleiner ist als ein gegebener Schwellenwert S, dann wird vom Nennverbrauchsmodus (ME2, MR2) in den Niederverbrauchsmodus (ME3, MR3) umgeschaltet.

3. Verfahren nach Anspruch 2, **dadurch gekennzeichnet, dass** die Bereitschaftsphase der Verbindung (E1, R1, E4, R4) im Bereitstehen für den Empfang eines technischen Worts auf unterschiedlichen Frequenzen besteht, wobei die Bereitschaftsdauer konfigurierbar ist, die Phase zum Aufbauen der Verbindung (E2, R2) aus dem Aussenden/Empfangen mehrerer technischer Wörter besteht, wobei jedes technische Wort auf einer anderen Frequenz ausgesendet/empfangen wird, wobei die Entscheidung zum Umschalten vom Nennverbrauchsmodus (ME2, MR2) in den Niederverbrauchsmodus (ME3, MR3) auch in Abhängigkeit von dem folgenden Kriterium erfolgt:
- wenn die Dauer (203) der zwischen dem Empfang des ersten technischen Wortes und dem Beginn der Kommunikationsphase (E3, R3) verbleibenden Zeit länger ist als die durch die Umschaltung von einem Verbrauchsmodus in den anderen induzierte maximale Latenz (204), dann wird vom Nennverbrauchsmodus (ME2, MR2) in den Niederverbrauchsmodus (ME3, MR3) umgeschaltet, ansonsten nicht.

4. Verfahren nach einem der vorherigen Ansprüche, **dadurch gekennzeichnet, dass** die Umschaltung von einem Verbrauchsmodus in einen anderen Verbrauchsmodus mit einer Prozedur des DVFS-(Dynamic Voltage and/or Frequency Scaling)-Typs erfolgt.

5. Vorrichtung, die wenigstens einen Prozessor umfasst, der eine Anwendung ausführt, die mehrere Verarbeitungsphasen (E1, E2, E3, E4) beinhaltet, wobei jede Phase mit einer Rechenlast assoziiert ist, **dadurch gekennzeichnet, dass** sie Mittel beinhaltet, die so ausgelegt sind, dass sie die Schritte des Verbrauchsverwaltungsverfahrens nach den Ansprüchen 1 bis 4 ausführen.
